# EUROPÄISCHE PATENTSCHRIFT

(11) **EP 2 468 608 B1**
(45) Veröffentlichungstag und Bekanntmachung des Hinweises auf die Patenterteilung: **06.01.2016**
(21) Anmeldenummer: 11009637.7
(22) Anmeldetag: 07.12.2011
(51) Int. Cl.: B62D 21/15, B62D 25/08

(54) **Montageträger**
Assembly support member
Support de montage

(30) Priorität: 23.12.2010 DE 102010056065
(43) Veröffentlichungstag der Anmeldung: 27.06.2012
(73) Patentinhaber: HBPO GmbH, 59552 Lippstadt (DE)
(72) Erfinder: Brückner, Reinhold, 33442 Herzebrock-Clarholz (DE)
(74) Vertreter: Schober, Mirko

(56) Entgegenhaltungen:
- EP-A2- 1 251 038
- DE-A1-102004 014 073
- DE-A1-102005 031 723

## Beschreibung

Die Erfindung betrifft einen Montageträger für Kraftfahrzeug-Frontends nach dem Oberbegriff des Anspruchs 1.

Montageträger der bekannten Art, wie sie z.B. aus EP 1 627 800 A2 und DE 10 2005 031 723 A1 bekannt sind, weisen zur Anbindung an einen Fahrzeuglängsträger einerseits und einer Crashbox mit daran montiertem Biegeträger andererseits Flanschplatten auf, welche in der Regel im Bereich der Seitenträger des Montageträgers vorgesehen sind. Die Flanschplatten, die in der Regel vier Bohrungen zur Aufnahme von Schraubbolzen aufweisen, beanspruchen in den Bereichen seitlich des Montageträgers Bauraum, welcher für die Unterbringung anderer Komponenten oder zusätzlicher Versteifungen nicht mehr zur Verfügung steht.

Aufgabe der vorliegenden Erfindung ist es, einen Montageträger der eingangs genannten Art anzugeben, welcher hinsichtlich des zur Anbringung von Crashboxen erforderlichen Bauraumes optimiert ist.

Gelöst wird diese Aufgabe durch einen Montageträger mit den Merkmalen des Anspruchs 1, vorteilhafte Ausführungsformen finden sich in den Unteransprüchen.

Der erfindungsgemäße Montageträger weist eine Mehrzahl Verbindungsabschnitte auf, welche unterschiedliche Aufgaben übernehmen. Die "klassische" Flanschplatte wird durch eine Mehrzahl Verbindungsabschnitte ersetzt. Hierdurch wird es möglich, dass die Crashbox mit Hilfe von deren Verbindungsteil bzw. Verbindungsflansch mit den Verbindungsabschnitten des Montageträgers verbunden werden kann, wobei die Crashbox zwischen einzelnen Verbindungsabschnitten hindurchgeführt oder wenigstens einer der Verbindungsabschnitte bei befestigter Crashbox zumindest seitlich des Grundkörpers der Crashbox liegt. Seitlich bedeutet in diesem Fall, dass der betreffende Verbindungsabschnitt auf irgendeine Art neben oder benachbart zum Grundkörper angeordnet sein kann; insbesondere kann der Verbindungsabschnitt oberhalb oder unterhalb wie auch in Fahrzeugquerrichtung rechts oder links des Grundkörpers angeordnet sein. Hierdurch wird erreicht, dass der die Crashbox umgebende Bauraum nicht für das Durchführen der Crashbox-Flanschplatte freigehalten werden muss, sondern anderweitig genutzt werden kann. Die erfindungsgemäßen Verbindungsabschnitte können dabei oberhalb oder/und unterhalb der Crashbox angeordnet sein. Zudem können die Verbindungsabschnitte sowohl auch zur Erhöhung der Steifigkeit etwa mit Rippen oder dergleichen ausgebildet sein, zudem kann ein unterhalb der Crashbox befindlicher Verbindungsabschnitt zur Abstützung und Aufnahme von Kräften eines anliegenden Fußgängerschutzbügels oder dergleichen dienen.

Erfindungsgemäß weist wenigstens einer der Verbindungsabschnitte eine Öffnung zur Durchführung von Befestigungsmitteln, insbesondere Schrauben, auf. Zwei der Verbindungsabschnitte können bevorzugt miteinander verbunden oder einstückig ausgebildet sein. Bevorzugt ist hierbei, dass der erste Verbindungsabschnitt mit einem dritten Verbindungsabschnitt verbunden und so angeordnet ist, dass der Verbindungsteil der Crashbox zwischen dem ersten und dem dritten Verbindungsabschnitt liegt.

Bei dieser Ausführungsform gelangen die beiden Verbindungsabschnitte zur Anlage an gegenüberliegenden Seiten der Flanschplatte einer Crashbox, so dass eine einfachere Montage möglich ist und die Einheit aus Crashboxen und Biegeträger sich besser vormontieren lässt.

Erfindungsgemäß ist vorgesehen, dass ein zweiter Verbindungsabschnitt (entfernt vom ersten Verbindungsabschnitt) vorgesehen ist, so dass die Crashbox zwischen diesen Verbindungsabschnitten liegt. Dabei weist vorteilhafterweise der zweite Verbindungsabschnitt einen vierten Verbindungsabschnitt, insbesondere in Form eines Schraubgewindes, auf. Dies hat den Vorteil, dass die Crashbox am vierten Verbindungsabschnitt nach deren Zusammenfügen mit dem Montageträger vorfixiert werden kann, bevor eine finale Verschraubung von Montageträger, Crashbox und Fahrzeuglängsträger erfolgt.

Ferner betrifft die Erfindung ein Kraftfahrzeug-Frontend mit einem Montageträger der oben beschriebenen Art. Das Frontend weist mit dem Montageträger verbundene Crashboxen auf, wobei diese einen sich in Fahrzeuglängsrichtung erstreckenden Grundkörper sowie eine an der Stirnseite des Grundkörpers vorgesehene Flanschplatte aufweisen. Die Flanschplatte weist Anlageabschnitte zur Anlage an entsprechende Verbindungsabschnitte des Montageträgers auf, wobei wenigstens einer der Verbindungsabschnitte seitlich (s.o.) des Grundkörpers angeordnet ist. Bevorzugt ist die Crashbox zwischen zwei Verbindungsabschnitten geführt.

Weiter ist vorgesehen, , dass wenigstens ein Verbindungsabschnitt des Montageträgers in Fahrzeuglängsrichtung vor und anliegend an einen Anlageabschnitt der Flanschplatte vorgesehen ist. Dabei ist ein zweiter Verbindungsabschnitt des Montageträgers in Fahrzeuglängsrichtung hinter und anliegend an einen Anlageabschnitt der Flanschplatte vorgesehen.

Die Erfindung wird nun anhand des Ausführungsbeispiels, welches in den Figuren 1 bis 4 näher gezeigt ist, schematisch näher erläutert.
Figur 1 zeigt einen erfindungsgemäßen Montageträger und einen Biegeträger mit Crashboxen in Explosionsdarstellung.
Figur 2 zeigt eine Ausschnittvergrößerung des Montageträgers aus Figur 1 in perspektivischer Ansicht.
Figur 3 zeigt eine perspektivische Ansicht eines erfindungsgemäßen Montageträgers mit Crashboxen.
Figur 4 zeigt eine Ausschnittvergrößerung des Montageträgers aus Figur 3 in perspektivischer Ansicht.

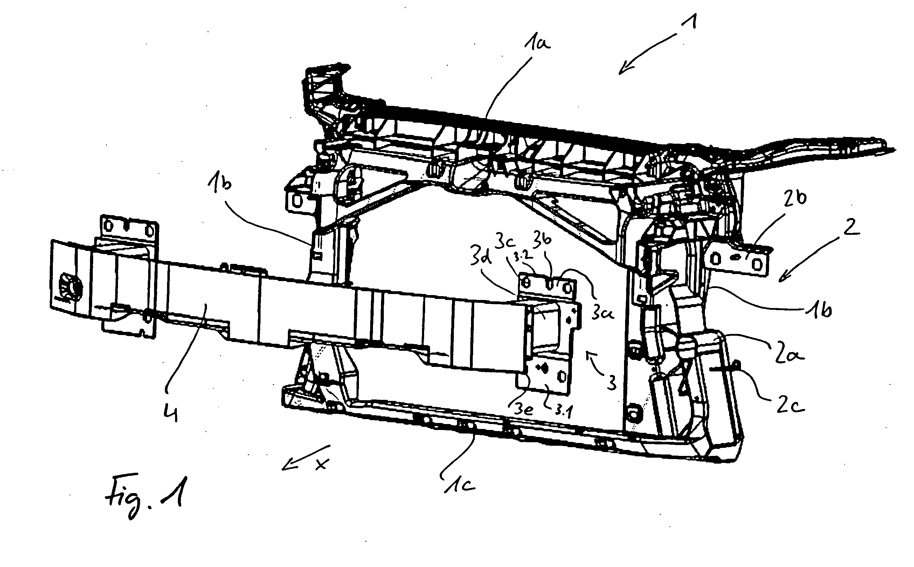

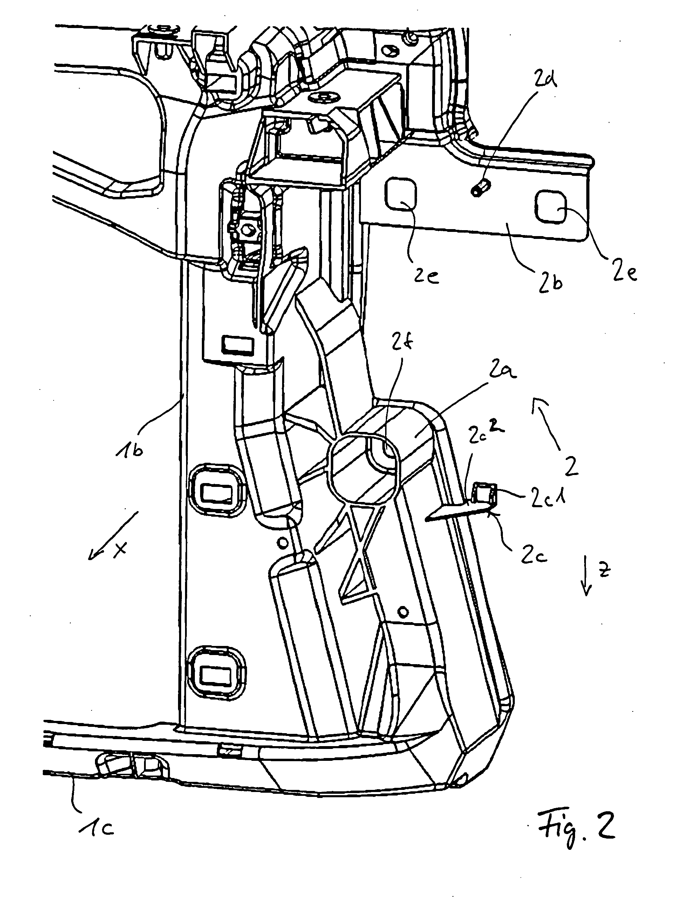

In der Figur 1 erkennt man einen Montageträger 1, welcher in bekannter Weise einen oberen Querträger 1a, einen unteren Querträger 1c sowie zwei Seitenträger 1b aufweist. Mit dem Buchstaben X ist die Fahrzeuglängsrichtung bzw. Fahrtrichtung angedeutet. Im Bereich der Seitenträger 1b sind die erfindungsgemäßen Verbindungsabschnitte 2a, 2b, 2c angeordnet. Mit diesen verbunden werden die Crashboxen 3, welche ihrerseits mit dem Biegeträger 4 verbunden sind. Die Crashbox selbst weist einen sich in Richtung X bzw. im Wesentlichen in diese Richtung erstreckenden Grundkörper 3d auf, an dessen dem Biegeträger 4 abgewandten (in Richtung X betrachtet hinteren) Ende eine Flanschplatte 3a vorgesehen ist. Die Flanschplatte 3a weist unter anderem Anlageabschnitte 3.1, 3.2 zur Anlage gegen Verbindungsabschnitte des Montageträgers 2 auf. Die einzelnen Funktionen sollen anhand der nachfolgenden Figuren näher erläutert werden.
Zunächst wird mit Bezug auf Figur 2 der Bereich des Seitenträgers 1b näher erläutert, an dessen Außenseite die Verbindungseinrichtung 2 mit ihren Verbindungsabschnitten 2a, 2b, 2c, 2d vorgesehen ist. Bei dem Montageträger handelt es sich um ein Hybridbauteil, bei dem die Verbindungsabschnitte ein- oder angespritzt sind. Die Verbindungsabschnitte haben unterschiedliche Aufgaben, dienen aber alle dazu, eine Fixierung oder Vorfixierung der Crashbox (in Figur 2 nicht gezeigt) zu ermöglichen. Vorgesehen ist ein erster Verbindungsabschnitt 2a, welcher eine Öffnung 2f aufweist, durch die ein Schraubbolzen oder ein anderes Befestigungselement geführt werden kann. Der Verbindungsabschnitt 2a weist auf seiner in Richtung X hinteren Seite einen Anlagebereich auf, an den ein Anlageabschnitt der Crashbox anliegen kann, siehe unten. Weiter ist ein zweiter Verbindungsabschnitt 2b vorgesehen, gegen den ein weitere Anlagebereich der Crashbox anliegen kann, entweder, wie hier gezeigt, in Richtung X vor dem zweiten Verbindungsabschnitt 2b oder auch (nicht gezeigt) dahinter. Ein dritter Verbindungsabschnitt 2c ist vorgesehen, welcher im gezeigten Beispiel am ersten Verbindungsabschnitt angebracht bzw. mit diesem einstückig ausgebildet ist.

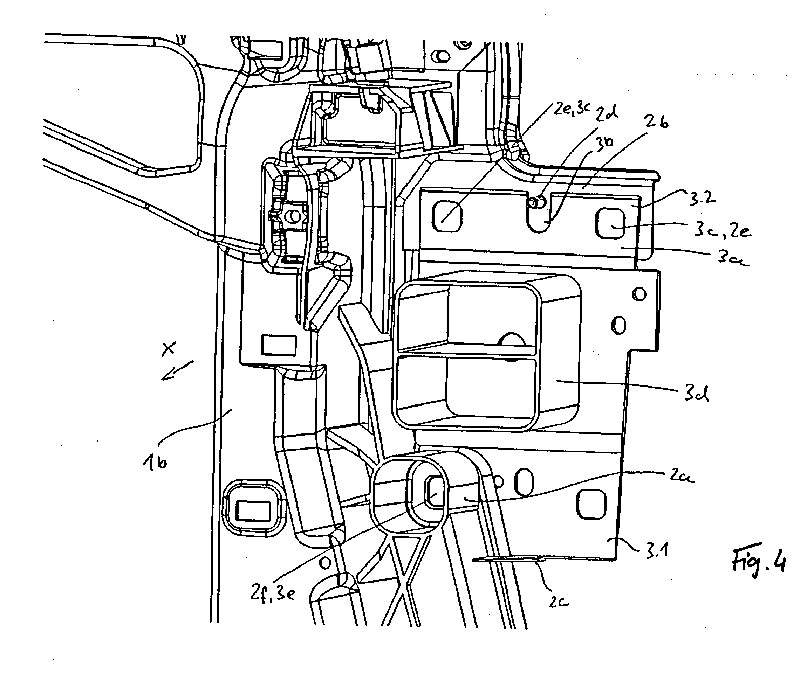

Der dritte Verbindungsabschnitt 2c dient bei der Vormontage der Positionierung der Crashbox, die mit dem Biegeträger 4 verbunden sein kann. Dabei gelangt der Anlageabschnitt der Crashbox, bei dem es sich bevorzugt um ein plattenförmiges Gebilde handelt, zwischen den ersten 2a und dritten Verbindungsabschnitt 2c. Zur besseren Führung und zum Vereinfachen des Einsetzens der Crashbox an dieser Stelle weist der dritte Verbindungsabschnitt 2c einen gegenüber der Richtung X schräg verlaufenden Führungsabschnitt 2c1 auf. Die Crashbox wird in Richtung Z eingesetzt, so dass ihr Anlageabschnitt auf der Anlagefläche 2c2 des dritten Verbindungsabschnitts 2c zwischen dem Bereich 2c1 und dem ersten Verbindungsabschnitt 2a zu liegen kommt, bevorzugt in einer Position, in der die Öffnung 2f in dem ersten Verbindungsabschnitt mit einer korrespondierenden Öffnung 3e im Anlageabschnitt 3.1 der Crashbox 3 fluchtet, so dass ein Befestigungselement hindurch geführt werden kann (vgl. Fig. 4). Gleichzeitig wird - etwa durch leichtes Schwenken der Crashbox bzw. der Kombination aus Crashboxen und Biegeträger 4 entgegen der Richtung X - eine Anlage zwischen dem Anlageabschnitt 3.2 der Crashbox 3 (bzw. deren Flanschplatte 3a) und dem zweiten Verbindungsabschnitt 2b hergestellt, wobei wiederum wenigstens eine Öffnung 2e im zweiten Verbindungsabschnitt 2b mit wenigstens einer entsprechenden Öffnung 3c im Anlageabschnitt 3.2 fluchtet.

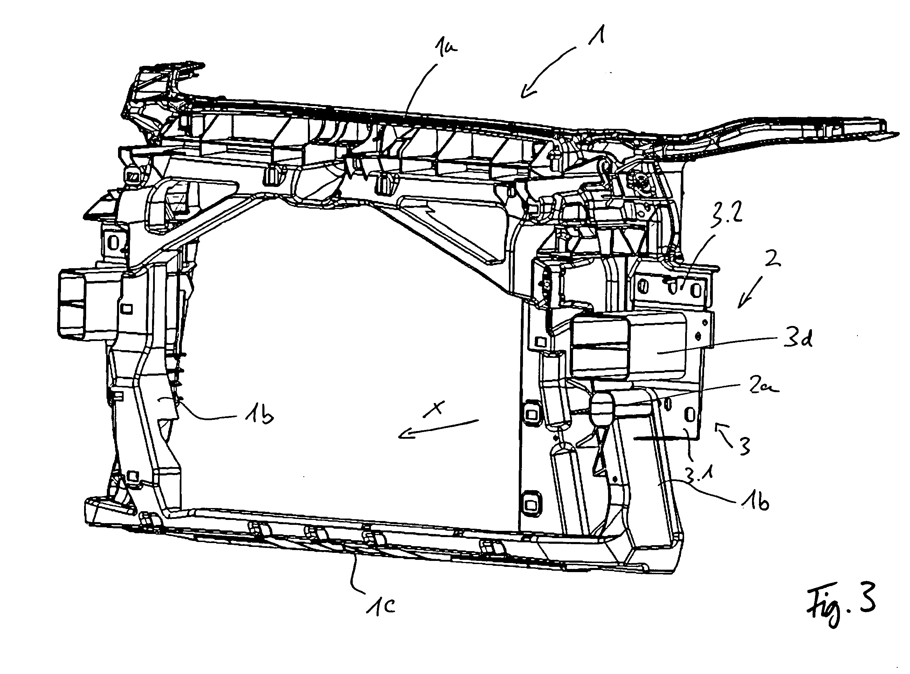

Diese Situation der Vormontage des Crashmanagementsystems bzw. der Crashboxen 3 am Montageträger 1 ist in den Figuren 3 und 4 abgebildet, wobei der Biegeträger nicht gezeigt ist. Wie insbesondere in Figur 4 zu sehen ist, fluchten die Öffnungen 2f und 3e von unterem Anlageabschnitt 3.1 und erstem Verbindungsabschnitt 2a miteinander, gleiches gilt auch entsprechend für die Öffnungen 2e und 3c des zweiten Verbindungsabschnitts 2b und des oberen Anlageabschnitts 3.2. Zusätzlich kann ein vierter Verbindungsabschnitt 2d am zweiten Verbindungsabschnitt 2b vorgesehen sein, der praktischerweise eine Aussparung 3b in dem oberen Anlageabschnitt 3.2 durchtritt. Dieser vierte Verbindungsabschnitt, der ein Schraubgewinde aufweisen kann, dient zur provisorischen Fixierung des oberen Anlageabschnittes 3.1 am zweiten Verbindungsabschnitt 2b. Diese provisorische Verbindung kann etwa durch eine Mutter realisiert werden, genauso ist aber denkbar, dass das vierte Verbindungselement 2d so ausgebildet ist, dass es bei Anlage des Abschnitts 3.2 und des Abschnitts 3.2 eine Rast- oder Schnappverbindung mit dem Abschnitt 3.2 eingeht. Vorteilhaft weist das Verbindungselement 2d dazu dann wenigstens eine Rastnase oder dergleichen auf.

So vorfixiert kann dann das Frontend des Fahrzeugs, also Montageträger mit vormontierten Crashboxen und Biegeträger am Fahrzeuglängsträger eines Fahrzeugs quasi als ein Teil befestigt werden.

Wie insbesondere in Figur 4 gezeigt, kann so am Montageträger eine großformatige Flanschplatte entfallen und es steht mehr Bauraum für andere Komponenten wie zusätzliche Versteifungen (etwa im Bereich des ersten Befestigungselements 2a) oder zusätzliche Komponenten im Bereich des Seitenträgers 1b zur Verfügung. Insbesondere kann der Bereich 2a in Richtung X dicker ausgebildet werden als bei herkömmlichen Montageträgern mit Flanschplatten. Dies gilt im Prinzip nicht nur für den Bereich um 2a unterhalb der Crashbox 3, sondern auch für den Bereich um 2b oberhalb der Crashbox 3. Um diesen in gleicher Weise zu nutzen kann vorgesehen sein, den Anlagebereich 3.1 nicht wie in Figur 4 gezeigt in Richtung X betrachtet vor dem zweiten Verbindungsabschnitt 2b vorzusehen, sondern dahinter. In diesem Fall stünde vor dem zweiten Verbindungsabschnitt 2b zusätzlicher Bauraum zur Verfügung. Die Aussparung zwischen zweitem Verbindungsabschnitt 2b und erstem Verbindungsabschnitt 2a wäre dann nur durch die Breite des Grundkörpers 3d der Crashbox vorgegeben.

## Patentansprüche

1. Kraftfahrzeug-Frontend mit einem Montageträger (1), wobei der Montageträger (1) Seitenträger (1b) aufweist und der Montageträger (1) im Bereich der Seitenträger (1b) eine Verbindungseinrichtung (2) mit Verbindungsabschnitten (2a, 2b, 2c, 2d) zur Verbindung des Montageträgers (1) mit einem Fahrzeuglängsträger sowie mit einer Crashbox (3) aufweist, sowie mit dem Montageträger (1) verbundene Crashboxen (3), wobei die Crashböxen (3) einen sich in Fahrzeuglängsrichtung (X) erstreckenden Grundkörper (3d) sowie eine an der Stirnseite des Grundkörpers (3d) vorgesehene Flanschplatte (3a) aufweisen, wobei die Flanschplatte (3a) Anlageabschnitte (3.1, 3.2) zur Anlage an entsprechende Verbindungsabschnitte (2a, 2b, 2c, 2d) des Montageträgers (1) aufweist,
**dadurch gekennzeichnet,**
**dass** die Verbindungsabschnitte (2a, 2b, 2c, 2d) am Montageträger (1) ein- oder angespritzt sind und wenigstens ein erster (2a) der Verbindungsabschnitte eine Öffnung (2f) zur Durchführung von Befestigungsmitteln, insbesondere Schrauben, aufweist und dieser seitlich des Grundkörpers (3d) angeordnet ist, wobei der erste (2a) der Verbindungsabschnitte in Fahrtrichtung (X) vor der Flanschplatte (3a) und ein weiterer (2b, 2c) der Verbindungsabschnitte in Fahrtrichtung (X) hinter der Flanschplatte (3a) der Crashbox (3) liegt.

2. Kraftfahrzeug-Frontend nach Anspruch 1,
**dadurch gekennzeichnet,**
**dass** zwei der Verbindungsabschnitte (2a, 2c; 2b, 2d) miteinander verbunden oder einstückig ausgebildet sind.

3. Kraftfahrzeug-Frontend nach Anspruch 2,
**dadurch gekennzeichnet,**
**dass** der erste Verbindungsabschnitt (2a) mit einem dritten Verbindungsabschnitt (2c) verbunden und so angeordnet ist, dass der Verbindungsteil (3a) der Crashbox (3) zwischen dem ersten und dem dritten Verbindungsabschnitt liegt.

4. Kraftfahrzeug-Frontend nach einem der vorherigen Ansprüche,
**dadurch gekennzeichnet,**
**dass** der weitere Verbindungsabschnitt ein zweiter Verbindungsabschnitt (2b) ist, der entfernt vom ersten Verbindungsabschnitt (2a) vorgesehen ist.

5. Kraftfahrzeug-Frontend nach Anspruch 4,
**dadurch gekennzeichnet,**
**dass** der zweite Verbindungsabschnitt (2b) einen vierten Verbindungsabschnitt (2d), insbesondere in Form eines Schraubgewindes, aufweist.

6. Kraftfahrzeug-Frontend nach einem der vorigen Ansprüche,
**dadurch gekennzeichnet,**
**dass** wenigstens ein Verbindungsabschnitt (2a) des Montageträgers (1) in Fahrzeuglängsrichtung (X) vor und anliegend an einen Anlageabschnitt (3.1) der Flanschplatte (3a) vorgesehen ist, wobei wenigstens ein zweiter Verbindungsabschnitt (2b, 2c) des Montageträgers (1) in Fahrzeuglängsrichtung (X) hinter und anliegend an einen Anlageabschnitt (3.1, 3. 2) der Flanschplatte (3a) vorgesehen ist.

7. Kraftfahrzeug-Frontend nach einem der vorigen Ansprüche,
**dadurch gekennzeichnet,**
**dass** der Grundkörper (3d) der Crashbox (3) zwischen wenigstens zwei Verbindungsabschnitten des Montageträgers angeordnet ist.

## Claims

1. Motor vehicle front end with an assembly support member (1), wherein the assembly support member (1) has side supports (1b) and the assembly support member (1) has in the region of the side supports (1b) a connecting means (2) with connecting portions (2a, 2b, 2c, 2d) to connect the assembly support member (1) to a vehicle longitudinal support member and also to a crashbox (3), and also crashboxes (3) connected to the assembly support member (1), wherein the crashboxes (3) have a base body (3d) extending in the vehicle longitudinal direction (X) and a flange plate (3a) provided at the end face of the base body (3d), wherein the flange plate (3a) has abutment portions (3.1, 3.2) for abutment against corresponding connecting portions (2a, 2b, 2c, 2d) of the assembly support member (1),
**characterised in that**
the connecting portions (2a, 2b, 2c, 2d) are sprayed in or on the assembly support carrier (1) and at least a first (2a) of the connecting portions has an opening (2f) to guide through fixing means, in particular screws, and this is arranged laterally on the base body (3d), wherein the first (2a) of the connecting portions lies in the travel direction (X) before the flange plate (3a) and a further (2b, 2c) of the connecting portions lies in the travel direction (X) behind the flange plate (3a) of the crashbox (3).

2. Motor vehicle front end according to claim 1,
**characterised in that**
two of the connecting portions (2a, 2c; 2b, 2d) are connected to each other or integrally formed.

3. Motor vehicle front end according to claim 2,
**characterised in that**
the first connecting portion (2a) is connected to a third connecting portion (2c) and is arranged so that the connecting part (3a) of the crashbox (3) lies between the first and the third connecting portion.

4. Motor vehicle front end according to one of the preceding claims,
**characterised in that**
the further connecting portion is a second connecting portion (2b) which is provided at a distance from the first connecting portion (2a).

5. Motor vehicle front end according to claim 4,
**characterised in that**
the second connecting portion (2b) has a fourth connecting portion (2d), in particular in the form of a screw thread.

6. Motor vehicle front end according to one of the preceding claims,
**characterised in that**
at least one connecting portion (2a) of the assembly support member (1) is provided in the vehicle longitudinal direction (X) before and adjacent to an abutment portion (3.1) of the flange plate (3a), wherein at least one second connecting portion (2b, 2c) of the assembly support member (1) is provided in the vehicle longitudinal direction (X) behind and adjacent to an abutment portion (3.1, 3.2) of the flange plate (3a).

7. Motor vehicle front end according to one of the preceding claims,
**characterised in that**
the base body (3d) of the crashbox (3) is arranged between at least two connecting portions of the assembly support member.

## Revendications

1. Extrémité frontale de véhicule automobile avec un support de montage (1), sachant que le support de montage (1) présente des supports latéraux (1b) et que le support de montage (1) est doté, dans la région des supports latéraux (1b), d'un dispositif de liaison (2) comprenant des sections de liaison (2a, 2b, 2c, 2d), qui sont destinées à relier le support de montage (1) à un longeron de véhicule automobile de même qu'à une crash-box (3), ainsi que des crash-box (3), qui sont reliées au support de montage (1), sachant que les crash-box (3) présentent un corps de base (3d), qui s'étend dans la direction longitudinale (X) du véhicule automobile, ainsi qu'une bride (3a), qui est prévue sur la face frontale du corps de base (3d), sachant que la bride (3a) présente des sections d'appui (3.1, 3.2) qui sont destinées à porter contre les sections de liaison (2a, 2b, 2c, 2d) du support de montage (1),
**caractérisée en ce que**
les sections de liaison (2a, 2b, 2c, 2d) sont injectées sur ou dans le support de montage (1) et que la première (2a) des sections de liaison présente une ouverture (2f) pour le passage de moyens de fixation, en particulier de vis, et que celle-ci est disposée à côté du corps de base (3d), sachant que le première (2a) des sections de liaison est située en amont de la bride (3a), dans la direction longitudinale (X) du véhicule automobile, et que l'une (2b, 2c) des autres sections de liaison est située en aval de la bride (3a) de la crash-box (3), dans la direction longitudinale (X) du véhicule automobile.

2. Extrémité frontale de véhicule automobile selon la revendication 1,
**caractérisée en ce que**
deux des sections de liaison (2a, 2b, 2c, 2d) sont reliées ensemble ou sont formées en une seule pièce.

3. Extrémité frontale de véhicule automobile selon la revendication 2,
**caractérisée en ce que**
la première de liaison (2a) est reliée à une troisième section de liaison (2c) et agencée de telle manière que la pièce de liaison (3a) de la crash-box (3) se trouve disposée entre la première section de liaison et la troisième section de liaison.

4. Extrémité frontale de véhicule automobile selon l'une des revendications précédentes,
**caractérisée en ce que**
l'autre section de liaison est une deuxième section de liaison (2b) qui est prévue à distance de la première section de liaison (2a).

5. Extrémité frontale de véhicule automobile selon la revendication 4,
**caractérisée en ce que**
la deuxième section de liaison (2b) présente une quatrième section de liaison (2d), en particulier en forme de filet de vis.

6. Extrémité frontale de véhicule automobile selon l'une des revendications précédentes,
**caractérisée en ce que**
au moins une section de liaison (2a) du support de montage (1) est prévue en amont, dans la direction longitudinale (X), du véhicule automobile et porte contre une section d'appui (3.1, 3.2) de la bride (3a), sachant qu'au moins une deuxième section de liaison (2b, 2c) est prévu en aval dans la direction longitudinale (X) du véhicule automobile et porte contre une section d'appui (3.1, 3.2) de la bride (3a).

7. Extrémité frontale de véhicule automobile selon l'une des revendications précédentes,
**caractérisée en ce que**
le corps de base (3d) de la crash-box (3) est disposé entre au moins deux sections de liaison du support de montage (1).
